# EUROPEAN PATENT APPLICATION

(11) **EP 2 055 857 A1**
(43) Date of publication of application: **06.05.2009**
(21) Application number: 07388076.7
(22) Date of filing: 31.10.2007
(51) Int. Cl.: E04D 7/00, B01J 35/00, C08J 7/04, C23C 26/00

(54) **Depolluting facing**

(71) Applicant: ICOPAL A/S, DK-2730 Herlev (DK)
(72) Inventor: Madec, Yves, 41100 Vendôme (FR); Verdebout, Renaud, 41170 Mondoubleau (FR)
(74) Representative: Sundien, Thomas

(57) **Abstract**

Depolluting facing for a building structure, e.g. a roofing membrane, including a first and a second layer. The first layer (3) acting as base for the at least second layer (2) wherein the second layer consist of granules (2) comprising NOx reducing anatase titanium dioxide. The first layer may constitute a bituminous membrane or a panel made up from plastic or metal. The granules may be fixed to the roofing membrane by pressing or calandering on the hot bituminous blend embedding the granules in the bituminous membrane. The granules can be made of anatase titanium dioxide and a mineral binder, for example silicate or phosphate.

## Description

### Technical Field

The present invention relates to a depolluting component, preferably for roofing.

### Background

One of today's serious threats to our environment is the emission of NOx (nitrogen oxide) and SOx (sulphur oxides).

NOx is the generic term for a group of highly reactive gases, all of which contain nitrogen and oxygen in varying amounts. Many of the nitrogen oxides are colourless and odourless. However, one common pollutant, nitrogen dioxide (NO₂), along with particles in the air, can often be seen as a reddish-brown layer over many urban areas.

NOx form when fuel is burned at high temperatures, as in a combustion process. The primary sources of NOx are motor vehicles, electric utilities, and other industrial, commercial, and residential sources that burn fuels. The division of the sources are roughly: utilities: 27%, motor vehicles: 49%, industrial/commercial/residential: 19%, other sources: 5%.

When NOx is emitted into the air, it reacts with water and other compounds to form various acidic compounds, fine particles, and ozone. These pollutants can remain in the air for days or even years. Prevailing winds can transport them hundreds of kilometres, often across states and national borders. The pollutants then fall to the earth in either a wet form (rain, snow, and fog) or a dry form (gases and particles). Impacts include impaired air quality, damage to public health, degradation of visibility, acidification of lakes and streams, harm to sensitive forest and coastal ecosystems and accelerated decay of materials, paints, and cultural artefacts such as buildings, statues, and sculptures nationwide.

NO₂ is one of the most prominent air pollutants and a poison by inhalation.

Manufacturers of NOx and SOx emitting products, such as manufactures of motor vehicles and burning stoves are devoted in developing products with the lowest possible emission of NOx and SOx. However, a strong need for an efficient depolluting initiative is evident.

It has been found that titanium dioxide, or TiO₂, particularly in the anatase form, under the exposure of UV light, exhibit excellent photocatalytic properties in removing NOx from the air. Trials with this material applied as a layer on outdoor buildings and in streets and highway paving are on-going with promising results.

Titanium dioxide is thus added to paints, cements, windows, tiles, or other products for sterilizing, deodorizing and anti-fouling properties and is also used as a hydrolysis catalyst.

As TiO₂ is exposed to UV light, it becomes increasingly hydrophilic; thus, it can be used for anti-fogging coatings or self-cleaning windows.

TiO₂ incorporated into outdoor building materials, such as paving stones, can substantially reduce concentrations of airborne pollutants such as volatile organic compounds, nitrogen oxides and sulphur oxides.

The European Patent 0 576 120 B1 disclose a method of preparing an anatase titanium dioxide having a high surface area.

The European Patent 0 919 667 B1 suggest a NOx removing pavement structure e.g. for sideways or roadways. The structure comprises a concrete layer, asphalt or paving layer and a surface layer, wherein the surface layer consists of a mixture of cement, aggregate and titanium dioxide powder.

The United Kingdom patent application 2 425 075 A suggest a NOx and SOx removing concrete roof tile or wall cladding element, wherein a photocatalytic topmost layer capable of oxidizing pollutants is provided.

The above prior art documents mode of action can briefly be outlined as:
- The pollutant contacts the photocatalyst.
- The pollutant is oxidized to an acidic intermediate product with UV light as the source of energy.
- The acidic intermediate product is neutralized with the alkaline components of the concrete base material holding the photocatalyst.
- The final products, soluble calcium nitrate or sulphate are washed away, either by rainfall or by sprinkling.

Common for EP 0 919 667 B1 and GB 2 425 075 A are that the layer holding the photocatalyst are a concrete layer acting as a matrix for the photocatalyst, and that the calcium carbonate (or similar) of the matrix actively takes part in the depolluting process.

The German patent 102 12 591 B4 suggest a bituminous covering comprising a coating of titanium dioxide as contact surface for purification of air- or waterborne pollutants. The coating consists of a bitumen emulsion suspending hydrophobicized titanium dioxide, hydrophobicized hydroxides, oxides and/or sulfates of alkali metals.

Again, the layer holding the titanium dioxide actively takes part in the depollution process.

### The Invention

It is an object of the present invention to set forth a support structure, preferably for roofing, wherein the support structure, in a simple, efficient and permanent manner, exhibits depolluting properties.

According to the present invention, a depolluting facing for a building structure are provided, the facing includes at least a first and a second layer; the first layer acting as a base for the at least second layer and the at least second layer comprising granules build up from anatase titanium dioxide and a binder.

The facing can be in the form of a bituminous membrane or a panel formed from non-bituminous materials like metal and/or plastics.

The invention is not in any way limited to embodiments wherein the granules are build up from anatase titanium dioxide and a binder. The invention will show similar effect using granules of 100% anatase titanium dioxide.

The depolluting mode of action according to the present invention can be outlined as:
- The pollutant contacts the photocatalyst.
- The pollutant is oxidized to an acid with UV light as the source of energy.
- The final product is washed away, either by rainfall or by sprinkling.

As it can be seen from the above reaction, there is no neutralization of acids.

If calcium carbonate is added to the granules, the depolluting process will be similar to the process of the prior art described earlier in this specification; the acid will be an intermediate product which will be neutralized with the calcium carbonate.

The maximum efficiency of the inventive roofing element is estimated to be about 2.4 g/m²/year of NOx with the NOx concentration of the atmosphere being around 250 ppb.

Considering the pluviometry in the European countries, the concentration of acid is too weak to be dangerous (for example in France, 800 l/m²/year gives a concentration of 0.003 mg/l).

### The figures

Figure 1 shows a schematic depolluting roofing, wherein a support base is covered by a layer of granules comprising TiO₂ anatase.
Figure 2 shows a schematic setup of a chamber wherein the depolluting properties of various roofing elements is tested.

### The preferred embodiments with reference to the figures

According to a preferred embodiment of the present invention, a bituminous membrane, such as a flexible web impregnated with any well known bituminous composition, constitute a first layer acting as a physical membrane and as a carrier for a photocatalytic layer consisting of granules 2.

In the first preferred embodiment, the granules 2 with high anatase titanium dioxide content, are build up from anatase TiO₂ (ratio by weight: 50-80%) and a mineral binder, for example silicate or phosphate binder, which is cooked at between 350°C and 550°C.

The inventive bituminous membrane may be handled, stored, transported, rolled and installed equivalent to any current bituminous membrane. Further, the bituminous membrane may be build up as a flexible web impregnated with a bituminous composition.

Upon the installation of the depolluting facing for a building structure 1 on e.g. the roof of a building, the airborne pollutant 5 contacts the photocatalytic layer 2.

The pollutant is oxidized to an acid with UV light 4 as the source of energy.

The final product 6, carbon dioxide, nitric acid or sulphuric acid, is washed away, either by rainfall or by sprinkling.

If calcium carbonate is added to the photocatalytic layer 2, the final product of the depolluting process will be soluble calcium nitrate or sulphate, which also will be washed away, either by rainfall or by sprinkling. (The acids will be an intermediate product which will be neutralized with the calcium carbonate)

In a second preferred embodiment, the anatase titanium dioxide is introduced into the external colouring coating of rock material granules and fixed with a mineral binder, for example silicate or phosphate binder, which is then cooked between 250°C and 550°C.

As an alternative of this second preferred embodiment, the external coating containing anatase titanium dioxide is applied in two consecutive layers.

In a third preferred embodiment, the anatase titanium dioxide, which can be in the form of nano-size particles, is introduced into the finishing surface treatment of coloured rock material granules and fixed with an organic binder, for example acrylic or polyurethane dispersion, which is then cooked between 100°C and 150°C.

In a fourth preferred embodiment, it is possible to combine any of the above

### preferred embodiments.

If calcium carbonate is added to the granules of the second or third preferred embodiments, the depolluting process will be similar to the process of the prior art described earlier in this specification.

The average diameter of the granules are preferably around 0,8-1,2 mm, distributed between 0,3 and 1,6 mm subsequent, the consumption of the granules will be in the range of 1 - 2 kg/m².

### Test results

The depolluting characteristics of anatase titanium dioxide demonstrate unquestionable efficiency emphasized by substantial testing with excellent results.

The test configuration for the anatase titanium dioxide incorporated in a bituminous depolluting roofing incl. results are disclosed below:

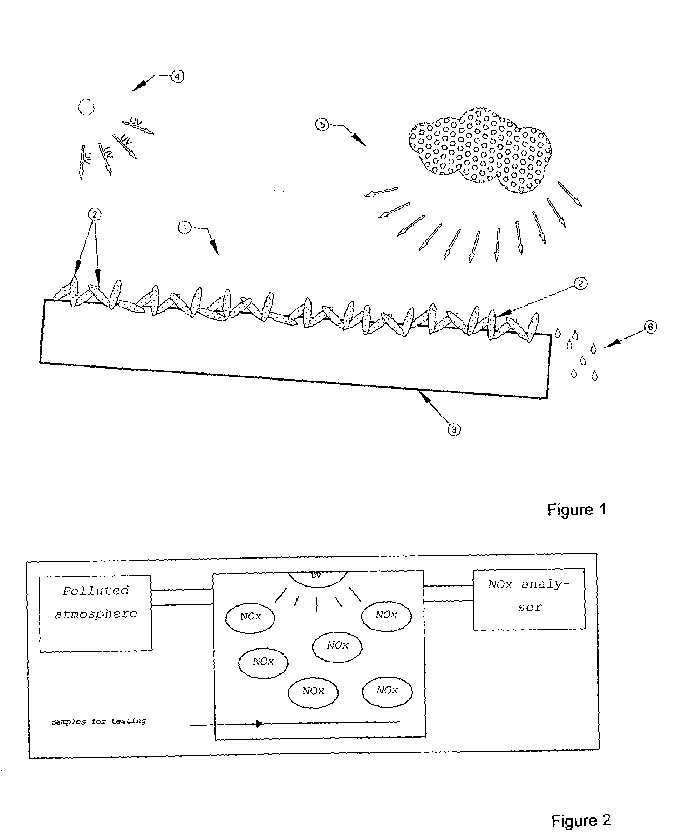

A simulation chamber is established according to figure 2. The simulation chamber will be able to put NOx polluted atmosphere in contact with materials prepared for testing. VOC or SOx polluted atmospheres could also be introduced into the simulation chamber.

In the example hereafter, a source of NOx polluted atmosphere is connected to a chamber wherein test samples are situated. Upon placing a test sample (200 mm x 200 mm) in the chamber, the NOx polluted atmosphere is, in a controlled manner, filled into the chamber whereby a predetermined concentration of NOx is reached.

An energy source in the form of UV-light is provided, and the chamber is irradiated for 7 hours.

Under irradiation, measurements of NOx (NO + NO₂) levels are carried out.

3 samples are provided for testing, which are tested one after the other and under same conditions. The samples are:
1. Bituminous membrane covered by granules which contains no TiO₂
2. Bituminous membrane covered by standard white coloured granules containing TiO₂ in external coating.
3. Bituminous membrane covered by granules made of TiO₂

The characteristics of the tests are:
- the chamber is a cubic with an edge of 650 mm.
- the walls of the chamber are covered with a film of Teflon to minimize adsorption of NOx gas on the walls.
- the chamber are irradiated by UV-light with following specifications : 2 W/m² of UV-B and 14 W/m² of UV-A
- the NOx concentration of the atmosphere, which is introduced into the chamber, is 400µg/m³ (250ppb) of which 100µg/m³ (50ppb) are NO₂. The concentrations are comparable to the annual average of concentrations measured on Paris's ring.
- all the measurements are done at atmospheric pressure, and at normal ambient temperature.

### Operations:

- the chamber is filled with polluted atmosphere following specifications of above
- the chamber is irradiated with UV-light for 7 hours.
- measurements of NOx (NO + NO₂) level is carried out during and after the 7 hours of irradiation.

### Results:

1. Bituminous membrane covered by granules which contains no TiO₂
   Result: No effect of NOx reduction recorded.
2. Bituminous membrane covered by standard white coloured granules containing TiO₂ in external coating.
   Result: Slow decrease of NOx with a final reduction of abt. 40% of the initial concentration.
3. Bituminous membrane covered by granules made of TiO₂
   Result: NOx reduction is close to 100% after only 3 hours of irradiation. The effect is permanent meaning that 7 hours on same sample leads to same efficiency.

It should be emphasized that the term "comprises/comprising/comprised of" when used in this specification is taken to specify the presence of stated features, integers, steps or components but does not preclude the presence or addition of one or more other features, integers, steps, components or groups thereof.

## Claims

1. A depolluting facing for a building structure, said facing (1) including at least a first and a second layer; the first layer (3) acting as base for the at least second layer (2) **characterized in that** the at least second layer has granules (2) defining a surface of said building structure and comprises anatase titanium dioxide.

2. The facing for a building structure according to claim 1, wherein the first layer is a bituminous membrane.

3. The facing for a building structure according to claim 2, wherein the granules (2) are applied during manufacturing of the roofing membrane by pressing or calandering on the hot bituminous blend, so that the granules are somewhat embedded in the bituminous membrane.

4. The facing for a building structure according to claim 2, wherein the granules are made of high anatase titanium dioxide content, and are built up from anatase TiO₂ (ratio by weight 50-80%) and a mineral binder, for example silicate or phosphate binder.

5. The facing for a building structure according to claim 2, wherein the granules contains anatase titanium dioxide introduced into an external colouring coating of rock material granules and fixed with a mineral binder

6. The facing for a building structure according to claim 5, wherein the external coating containing anatase titanium dioxide is applied in two consecutive layers.

7. The facing for a building structure according to claim 2, wherein the granules contains anatase titanium dioxide in the form of nano-size particles, introduced into the finishing surface treatment of coloured rock material granules and fixed with an organic binder.

8. The facing for a building structure according to claim 2, wherein the granules are made of any combination of granules as described in claims 4, 5, 6 and 7.

9. The facing for a building structure according to claim 2, wherein the membrane may be handled, stored, transported, rolled and installed equivalent to any current bituminous membrane.

10. The facing for a building structure according to claim 1, wherein the first layer is in the form of a panel which is formed from non-bituminous materials like metal and/or plastics.

11. The facing for a building structure according to claim 10, wherein the granules (2) are applied by homogeneous distribution over a pre-coated metal panel and/or plastic panel and then fixed by an organic coating (over-glaze).

12. The facing for a building structure according to claim 10, wherein the granules are made of high anatase titanium dioxide content, and is built up from anatase TiO₂ (50-80%) and a mineral binder, for example silicate or phosphate binder.

13. The facing for a building structure according to claim 10, wherein the granules contains anatase titanium dioxide introduced into an external colouring coating of rock material granules and fixed with a mineral binder

14. The facing for a building structure according to claim 13, wherein the external coating containing anatase titanium dioxide is applied in two consecutive layers.

15. The facing for a building structure according to claim 10, wherein the granules contains anatase titanium dioxide in the form of nano-size particles, introduced into the finishing surface treatment of coloured rock material granules and fixed with an organic binder.

16. The facing for a building structure according to claim 10, wherein the granules are made of any combination of granules as described in claims 12, 13, 14 and 15.
